# EUROPEAN PATENT SPECIFICATION

(11) **EP 0 957 693 B1**
(45) Date of publication and mention of the grant of the patent: **04.06.2003**
(21) Application number: 97945192.9
(22) Date of filing: 07.10.1997
(51) Int. Cl.: A23L 1/20, A23L 1/201

(54) **PROCESS FOR PRODUCING DEHYDRATED WHOLE LENTILS**
VERFAHREN ZUR HERSTELLUNG VON DEHYDRATISIERTEN GANZEN LINSEN
PROCEDE POUR LA PRODUCTION DE LENTILLES ENTIERES DESHYDRATEES

(30) Priority: 07.10.1996 US 726558
(43) Date of publication of application: 24.11.1999
(73) Proprietor: Sterner, Mark H., Riverside California 92505 (US); Sterner, Mark M., Roseburg Oregon 97470 (US); Zane, Ronald S. O., Riverside California 92505 (US)
(72) Inventor: Sterner, Mark H., Riverside California 92505 (US); Sterner, Mark M., Roseburg Oregon 97470 (US); Zane, Ronald S. O., Riverside California 92505 (US)
(74) Representative: Maury, Richard Philip
(86) International application number: US9715732
(87) International publication number: WO98015190

(56) References cited:
- US-A- 4 871 567
- US-A- 5 124 170

## Description

### Field of the Invention

The present invention relates generally to legume food products, and more particularly to a process for producing dehydrated whole lentils which are quickly reconstitutable and having the qualities of conventional cooked fresh lentils.

### Background of the Invention

Food plants which have a pod that opens along two seams when the edible seeds are ripe are known as legumes. Peas, beans, peanuts, and lentils are the most popular legumes, though there are many other species. Legumes are an important food for humans around the world, and are easily grown under varying soil and climatic conditions. In particular, the lentil is small and lens-shaped, and is never used green but is dried when it is fully ripe. In America, lentils are most generally eaten in soup, though elsewhere they are a staple food which appears in stews, salads, and other standard dishes. There are two varieties of lentils: the French variety, grey outside, yellowish inside, and sold with the seed coat on; and the Egyptian variety, reddish-yellow, smaller and rounder, without a seed coat. Lentils nutritionally are a good source of carbohydrates and incomplete protein, and also contain some B vitamins, iron, calcium, and Vitamin A.

Traditionally, lentils are prepared by soaking in a pot containing water, adding more water and covering the pot, bringing the water to a boil, and reducing the heat and gently cooking the lentils for at least two hours. Although such a method has proven generally suitable for preparing fresh lentils for eating, the time-consuming preparation detracts from the overall desirability of serving lentils.

In view of the time-consuming preparation of fresh lentils, whole lentils or lentil soups are generally available either in cans packed in water, in a sealed vapor pouch having intermediate moisture, or dehydrated (usually dried in a frozen state under high vacuum). The canned lentils are bulky, creating a storage and transportation problem. The canned, vapor pouch and freeze-dried lentils are perceived as a lower quality food product not having the color, appearance, texture, and consistency of conventionally prepared fresh lentils. Also, the freeze-dried lentils are not immediately reconstitutable, but typically require heat and stirring to achieve the transformation to whole lentils or lentil soup. And even despite the proper mixing of water and freeze-dried lentils, small lumps generally remain causing the resultant product to have a sandy-mouth feel. As such, the prior art has recognized the problem of the time-consuming preparation of lentils, though the proposed solutions have, to date, been ineffective in providing a satisfactory remedy.

By way of further background, US Patent No. 5,213,831 discloses a processing system for quick-cooking legumes. Such a system comprises cooking equipment for receiving, sizing, moisturizing, tempering and precooking legumes. There are provided two downstream rollers which are utilized for fracturing the legumes whereat they are cooled and stored thereafter.

U.S. Patent No. 4,871,567 discloses a method for preparing a reconstitutable, dehydrated refried bean product containing whole beans as well as crushed beans. The bean product is essentially hydrated, cooked, dehydrated, combined with secondary ingredients, and subsequently packaged. During the cooking stage, the beans destined to be crushed are slightly undercooked while the beans to be remained whole are fully cooked.

U.S. Patent No. 5,124,170 disclosed concentrated frozen leguminous food products and a method for preparing the same. Such food products are prepared by cleaning the legumes, removing all unwanted material, tempering the legumes until they are partially hydrated, steam cooking the legumes in direct injected live steam, crushing the legumes between rolls, forming the legumes into nuggets, and quick freezing the resultant nuggets. The resulting food products features the color and aroma of a food product prepared from fresh legumes.

### Summary of the Invention

The present invention specifically addresses and alleviates the above-mentioned deficiencies associated with the prior art. The present invention comprises a process as claimed in Claims 1 and 8. The process produces dehydrated whole lentils which are quickly reconstitutable into a food product having the qualities of conventional cooked lentils. The process generally comprises the steps of: providing a quantity of uncooked, dried lentils; tempering the lentils; cooking the lentils in steam; cracking the pericarp covering of the lentils; and dehydrating the lentils by passing them through a compartmentalized oven having sectional controls for temperature and humidity.

The tempering step includes the operations of: immersing the lentils in water causing significant absorption; draining the excess water; and allowing the lentils to stand such that the moisture equilibrates throughout.

The step of cracking the pericarp covering is accomplished by directing the lentils between a pair of opposing smooth rollers. If whole lentils are the desired resultant product, the cotyledon seed should not be exposed outside the pericarp covering. If lentil soup is the desired resultant product, the pericarp covering should be broken such that approximately one millimeter of the cotyledon seed is exposed. The cracking of the pericarp covering is preferably carried out by flattening the lens-shaped lentils between opposing sides. By employing smooth rollers only, as opposed to corrugated rollers that penetrate the cotyledon, the cotyledon substantially retains its natural structure, both initially and after processing and reconstitution, to thereby maintain a more natural food product.

The resultant food product is reconstitutable into whole lentils or lentil soup upon placement in hot water for approximately one minute, without requiring continuous mixing. The whole lentils or lentil soups have the color, appearance, texture and consistency of conventionally prepared fresh lentils. These, as well as other advantages of the present invention will become more apparent from the following description and drawings.

### Brief Description of the Drawings

Figure 1 is a flowchart illustrating the sequence of operations performed in the practice of the preferred process of the present invention;
Figure 2 is a front elevational view of a rotary steam cooker which may be used in the practice of the process of the present invention;
Figure 3 is a partial cross-sectional view of a continuous screw steam cooker which may be used in the practice of the process of the present invention.

### Detailed Description of the Preferred Embodiment

The detailed discussion set forth below in connection with the appended drawings is intended as a description of the presently preferred process of the invention. The description sets forth the functions and sequence of steps for practicing the invention in connection with the preferred process.

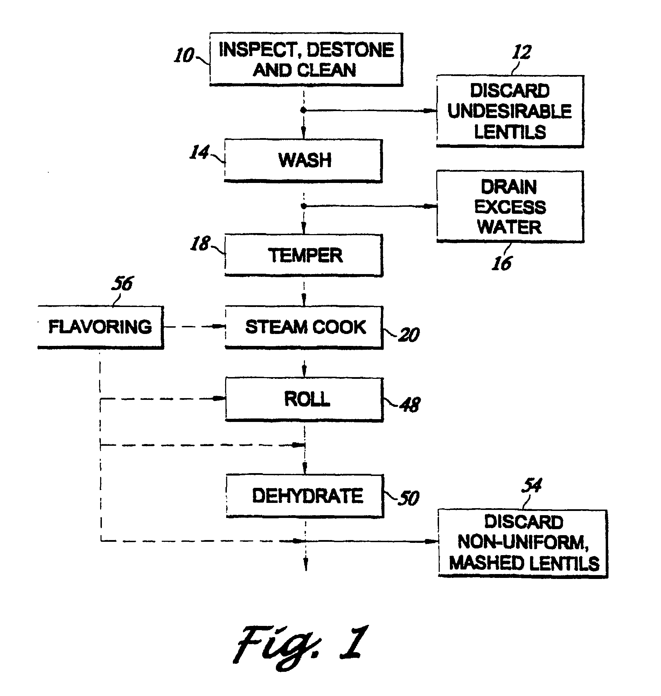

The process for producing dehydrated whole lentils is generally illustrated in Figure 1 which depicts the presently preferred process of the invention. The preferred process generally comprises the steps of inspecting and cleaning, washing, tempering, steam cooking, rolling, and dehydrating the lentils. The lentil product produced by the present process forms an instantly reconstitutable food product having the color, appearance, texture, aroma, and consistency of conventionally prepared fresh whole lentils or lentil soup. The resultant dehydrated lentil product will have a moisture content of approximately 2% to 10%, with the preferred moisture content being approximately 5%. The present process is practiced upon lentils of the French variety, sold with the seed coat on.

The individual steps of the present process will now be discussed for ease in understanding the subject invention.

The initial inspection, de-stoning, and cleansing operation 10 of the lentils to remove unwanted materials is carried out manually or automatically in accordance with known methods of the prior art. The lentils are typically received in tote bags or hoppers, and undesirable or otherwise substandard lentils are discarded 12.

After inspection and cleaning 10, the lentils are washed 14 in ambient temperature water, or any acceptable liquid capable of removing foreign material such as dirt and pesticides. Following washing, the lentils are drained 16 and the excess water is discarded. After being washed, the lentils are tempered 18 by immersion in water for a period of time sufficient for the lentils to absorb water to reach from 125% to 225% of their original weight. Preferably the lentils are immersed in ambient temperature water until the lentils (initially approximately 10% water weight) reach 30% to 60% water weight (usually for one to six hours), but preferably 46% water weight (three hours). The water temperature should not exceed 29°C (85°F), as higher temperatures may lead to spoilage due to rapid bacterial growth and/or loss of natural flavors. Continuing the tempering operation, the water is then drained, and the lentils set aside and left to stand for approximately three hours at ambient room temperature. This conditioning allows the moisture to equilibrate itself throughout the lentils to provide uniform softness.

Upon completion of the tempering 18, the lentils are steam cooked 20 with direct injected live steam in a low pressure steam environment at a pressure of from 69 kPa (10 PSIG) to 138 kPa (20 PSIG), preferably at 103 kPa (15 PSIG). The cooking time depends upon the exact pressure, and desired texture, but is approximately 10 to 20 minutes.

The lentils are preferably placed in a rotating, substantially closed steam vessel to assure continuous contact of the lentils to the steam at the low cooking pressure. The rotating steam vessel rotates the lentils such that the same are continuously being tumbled and evenly exposed to steam so as to facilitate the cooking of the lentils equally. As those skilled in the art would recognize, the cooking could also be accomplished by boiling the lentils in water or exposing the lentils to infrared heat sources, microwaves, etc.

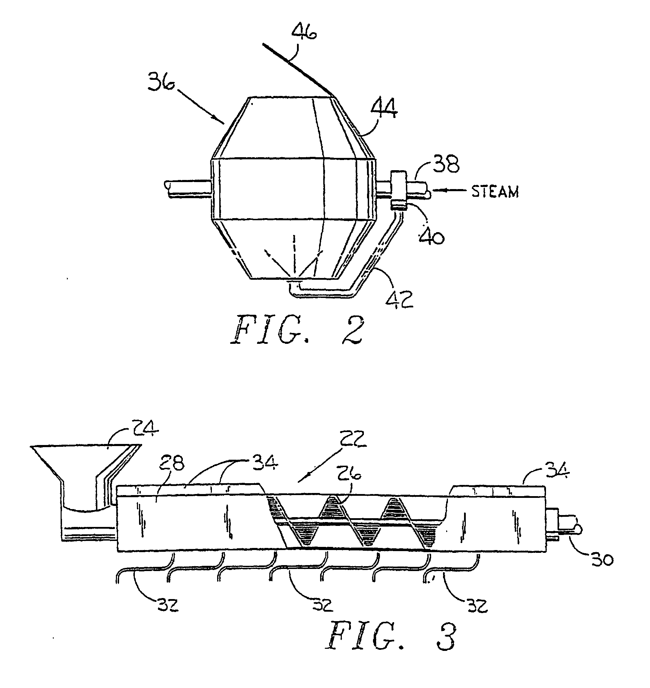

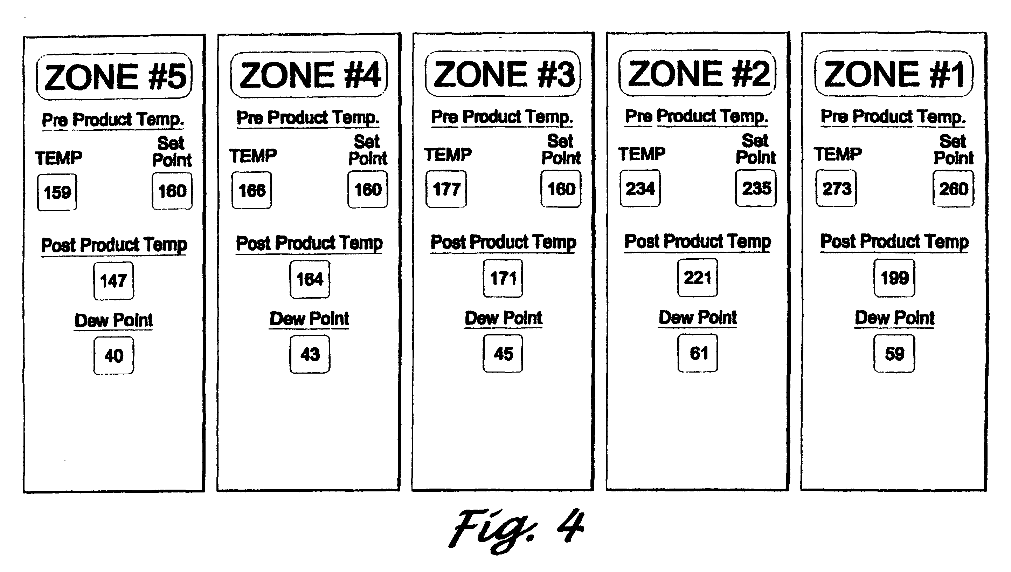

The cooking of the lentils is preferably accomplished through utilization of a continuous screw steam cooker 22 as shown in Figure 3. The continuous screw steam cooker 22 is adapted to provide a steady output, and is used by placing the lentils into a hopper 24 from which they are carried by a screw 26 through a housing 28 toward an outlet 30. Steam is applied to the housing 28 through tubes 32 and contained therein by doors 34. The volumes of steam supplied through the tubes 32 may be varied along the length of the steam cooker 22.

As an alternative to the continuous screw steam cooker 22, the lentils may be cooked in a rotary steam cooker 36 as shown in Figure 2. The rotary steam cooker 36 typically has a capacity of approximately 14 cubic feet and rotates the lentils contained therein to assure even and thorough cooking. Steam is provided via an intake line 38 from which it travels through a coupling nut 40 and tube 42 into a housing 44. A lid 46 provides a means for placing the lentils into and removing the lentils from the rotating steam cooker 36. The steam cooker 36 is typically alternatively supplied with steam and then rotated. Injection of steam into the housing 44 when rotary steam cooker is in an upright position (with the lid 46 uppermost) ensures even distribution of the steam throughout the lentils within the housing 44. Subsequent rotation of the rotary steam cooker 36 mixes the lentils to further ensure uniform heat distribution.

Subsequent to being cooked, the lentils are conveyed to the roller mills. In the rolling operation 48, the lentils are smoothly cracked between one pair of opposing smooth rollers. The rolling operation flattens the lens-shaped lentils so as to flatten the lentils between the opposing sides, causing a crack in a pericarp covering. The pair of smooth rollers have an adjustable roll gap set at from 1.78 mm (0.070 inch) to 2.79 mm (0.110 inch) to flatten the lentils between their opposing sides and accomplish the cracking of the pericarp. The lens-shaped lentils are oriented such that they are pressured between their opposing sides, the orientation accomplished by feeding individual lentils near the top of either roller such that the lentils lay parallel with the surface as they travel through the gap. If, alternatively, the desired product is dehydrated lentils for use in making lentil soup rather than dehydrated whole lentils, the roll gap is decreased to 1.27 mm (0.050 inch) to 1.78 mm (0.070 inch) to thereby cause greater pressure to be applied to the lentils, such that approximately one millimeter of the cotyledon is expressed outside the pericarp. The cotyledon outside the shell provides thickening and body to the resultant soup when the dried lentils are reconstituted with water. If a thicker soup is desired, a bigger crush may be imposed on the lentils to cause a greater portion of the cotyledon to be expressed outside the pericarp.

After undergoing the rolling operation 48, the lentils are then dehydrated 50. The drying of the lentils is accomplished by the passage of the lentils into an atmospheric dryer (a compartmentalized oven having independent sectional controls for temperature and humidity). Care must be taken not to overheat the lentils so as to "toast" the resultant product. As previously indicated, upon merging from the air drying operation, the lentils have a moisture content of preferably from 4% to 6%.

Once the lentils have been subjected to aforementioned dehydration process 50, they are preferably sized so as to have a substantially uniform shape and size for aesthetics and more uniform packaging density. In the sizing process 52, the lentils may be passed through a power sieve whereby larger lentils are reduced in size. Also alternatively, the sieve may be used to provide a portion of the lentils comminuted for use in soup or casseroles. Thereafter, the lentils are packaged for storage and/or shipping.

The dehydrated lentil product formed in accordance with the aforementioned process is reconstituted simply by adding water thereto. In particular, the lentil product reconstitutes in hot water within approximately four minutes, and reconstitutes in cold water in approximately twenty minutes. Importantly, the reconstitution of the lentil product occurs without constant stirring. Despite not being constantly stirred, the lentil product is not afloat on the top surface of the water during reconstitution. The air dried lentil product is economical to produce, and has a shelf life of at least one year.

It is understood that the process described herein as shown in the drawings represents only a presently preferred practice of the invention.

## Claims

1. A process for producing reconstitutable, dehydrated, whole lentils, the process comprising the steps of:
(a) providing a quantity of uncooked, dry lentils having a cotyledon inner seed and a pericarp outer covering of a generally lens shape with a pair of opposing sides;
(b) tempering (18) the lentils by immersion in water for a period of time sufficient for the lentils to absorb water to reach from 125% to 225% of original weight, draining remaining excess water from the lentils, and allowing the lentils to stand for a time sufficient to acquire a moisture content substantially equilibrated throughout the lentils;
(c) cooking (20) the lentils in a steam environment for a period of time sufficient to soften the lentils;
(d) cracking the pericarp outer covering of the cooked lentils by passing the lentils between two opposing smooth rollers having a gap therebetween sufficient to crack said covering without exposing the cotyledon inner seed; and
(e) dehydrating (50) the cooked lentils having the cracked pericarp outer covering by passing the lentils through a compartmentalized oven having independent sectional controls for temperature and humidity.

2. A process as claimed in Claim 1 wherein the moisture content substantially equilibrated throughout the lentils is from 30% to 60% by volume of the lentils.

3. A process as claimed in Claim 1 or Claim 2 wherein the steam environment is at a pressure of from 69 kPa (10 PSIG) to 138 kPa (20 PSIG).

4. A process as claimed in Claim 3 wherein the steam environment is a continuous screw steam cooker (22).

5. A process as claimed in Claim 3 wherein the steam environment is a rotary steam cooker (36).

6. A process as claimed in any preceding Claim wherein the gap between the rollers is from 1.78 mm (0.070 inch) to 2.79 mm (0.110 inch).

7. A process as claimed in any preceding Claim wherein the cooked lentils are dehydrated to a moisture content of from 2% to 10% by volume.

8. A process for producing reconstitutable, dehydrated, whole lentils, the process comprising the steps of:
(a) providing a quantity of uncooked, dry lentils having a cotyledon inner seed and a pericarp outer covering of a generally lens shape with a pair of opposing sides;
(b) tempering (18) the lentils by immersion in water for a period of time sufficient for the lentils to absorb water to reach from 125% to 225% of original weight, draining remaining excess water from the lentils, and allowing the lentils to stand for a time sufficient to acquire a moisture content substantially equilibrated throughout the lentils;
(c) cooking (20) the lentils in a steam environment for a period of time sufficient to soften the lentils;
(d) cracking the pericarp outer covering of the cooked lentils by passing the lentils between two opposing smooth rollers having a gap therebetween sufficient to crack said covering and expose one millimeter of the cotyledon inner seed; and
(e) dehydrating (50) the cooked lentils having the cracked pericarp outer covering by passing the lentils through a compartmentalized oven having independent sectional controls for temperature and humidity.

9. A process as claimed in Claim 8 wherein the moisture content substantially equilibrated throughout the lentils is from 30% to 60% by volume of the lentils.

10. A process as claimed in Claim 8 or Claim 9 wherein the steam environment is at a pressure of from 69 kPa (10 PSIG) to 138 kPa (20 PSIG).

11. A process as claimed in Claim 10 wherein the steam environment is a continuous screw steam cooker (22).

12. A process as claimed in Claim 10 wherein the steam environment is a rotary steam cooker (36).

13. A process as claimed in any of Claims 8 to 12 wherein the gap between the rollers is from 1.27 mm (0.050 inch) to 1.78 mm (0.070 inch).

14. A process as claimed in any of Claims 8 to 13 wherein the cooked lentils are dehydrated to a moisture content of from 2% to 10% by volume.

## Patentansprüche

1. Verfahren zur Herstellung von aus einem Konzentrat zubereitbaren dehydratisierten ganzen Linsen, wobei das Verfahren die folgenden Schritte aufweist:
(a) Bereitstellen einer Menge von ungekochten, trockenen Linsen mit einem inneren Keimblattkern und einer äußeren Perikarp-Umhüllung von im allgemeinen Linsenform mit einem Paar gegenüberliegenden Seiten;
(b) Anmachen (18) der Linsen durch Tauchen in Wasser über eine Zeitdauer, die ausreichend ist, damit die Linsen Wasser aufnehmen können, um 125% bis 225% des ursprünglichen Gewichtes zu erreichen, Ablassen des verbleibenden überschüssigen Wassers von den Linsen und Zulassen, daß die Linsen über eine Zeit stehenbleiben, die ausreichend ist, um einen Feuchtigkeitsgehalt zu erreichen, der im wesentlichen durchgängig in den Linsen ausgeglichen ist;
(c) Kochen (20) der Linsen in einer Dampfumgebung über eine Zeitdauer, die ausreichend ist, um die Linsen zu erweichen;
(d) Aufbrechen der äußeren Perikarp-Umhüllung der gekochten Linsen, indem die Linsen zwischen zwei gegenüberliegenden glatten Walzen hindurchgehen, die einen Spalt dazwischen aufweisen, der ausreichend ist, um die Umhüllung aufzubrechen, ohne daß der innere Keimblattkern freigelegt wird; und
(e) Dehydratisieren (50) der gekochten Linsen, die eine aufgebrochene äußere Perikarp-Umhüllung aufweisen, indem die Linsen durch einen unterteilten Ofen mit unabhängigen Abschnittsreglern für Temperatur und Feuchtigkeit geführt werden.

2. Verfahren nach Anspruch 1, bei dem der Feuchtigkeitsgehalt, der im wesentlichen durchgängig in den Linsen ausgeglichen ist, von 30 bis 60 Vol.-% der Linsen beträgt.

3. Verfahren nach Anspruch 1 oder Anspruch 2, bei dem die Dampfumgebung bei einem Druck von 69 kPa (10 psig) bis 138 kPa (20 psig) liegt.

4. Verfahren nach Anspruch 3, bei dem die Dampfumgebung ein kontinuierlicher Schneckendampfkocher (22) ist.

5. Verfahren nach Anspruch 3, bei dem die Dampfumgebung ein rotierender Dampfkocher (36) ist.

6. Verfahren nach vorhergehenden Ansprüchen, bei dem der Spalt zwischen den Walzen von 1,78 mm (0,070 in.) bis 2,79 mm (0,110 in.) beträgt.

7. Verfahren nach vorhergehenden Ansprüchen, bei dem die gekochten Linsen auf einen Feuchtigkeitsgehalt von 2 bis 10 Vol.-% dehydratisiert werden.

8. Verfahren zur Herstellung von aus einem Konzentrat zubereitbaren dehydratisierten ganzen Linsen, wobei das Verfahren die folgenden Schritte aufweist:
(a) Bereitstellen einer Menge von ungekochten, trockenen Linsen mit einem inneren Keimblattkern und einer äußeren Perikarp-Umhüllung von im allgemeinen Linsenform mit einem Paar gegenüberliegenden Seiten;
(b) Anmachen (18) der Linsen durch Tauchen in Wasser über eine Zeitdauer, die ausreichend ist, damit die Linsen Wasser aufnehmen können, um 125% bis 225% des ursprünglichen Gewichtes zu erreichen, Ablassen des verbleibenden überschüssigen Wassers von den Linsen und Zulassen, daß die Linsen über eine Zeit stehenbleiben, die ausreichend ist, um einen Feuchtigkeitsgehalt zu erreichen, der im wesentlichen durchgängig in den Linsen ausgeglichen ist;
(c) Kochen (20) der Linsen in einer Dampfumgebung über eine Zeitdauer, die ausreichend ist, um die Linsen zu erweichen;
(d) Aufbrechen der äußeren Perikarp-Umhüllung der gekochten Linsen, indem die Linsen zwischen zwei gegenüberliegenden glatten Walzen hindurchgehen, die einen Spalt dazwischen aufweisen, der ausreichend ist, um die Umhüllung aufzubrechen, und um einen Millimeter des inneren Keimblattkernes freizulegen; und
(e) Dehydratisieren (50) der gekochten Linsen, die eine aufgebrochene äußere Perikarp-Umhüllung aufweisen, indem die Linsen durch einen unterteilten Ofen mit unabhängigen Abschnittsreglern für Temperatur und Feuchtigkeit geführt werden.

9. Verfahren nach Anspruch 8, bei dem der Feuchtigkeitsgehalt, der im wesentlichen durchgängig in den Linsen ausgeglichen ist, von 30 bis 60 Vol.-% der Linsen beträgt.

10. Verfahren nach Anspruch 8 oder Anspruch 9, bei dem die Dampfumgebung bei einem Druck von 69 kPa (10 psig) bis 138 kPa (20 psig) liegt.

11. Verfahren nach Anspruch 10, bei dem die Dampfumgebung ein kontinuierlicher Schneckendampfkocher (22) ist.

12. Verfahren nach Anspruch 10, bei dem die Dampfumgebung ein rotierender Dampfkocher (36) ist.

13. Verfahren nach einem der Ansprüche 8 bis 12, bei dem der Spalt zwischen den Walzen von 1,27 mm (0,050 in.) bis 1,78 mm (0,70 in.) beträgt.

14. Verfahren nach einem der Ansprüche 8 bis 13, bei dem die gekochten Linsen auf einen Feuchtigkeitsgehalt von 2 bis 10 Vol.-% dehydratisiert werden.

## Revendications

1. Procédé de production de lentilles entières déshydratées et reconstituables, le procédé comprenant les étapes ci-dessous:
(a) fourniture d'une quantité de lentilles sèches non cuites comportant des graines internes de cotylédon et une couverture externe de péricarpe ayant en général une forme de lentille avec une paire de côtés opposés;
(b) trempage (18) des lentilles par immersion dans de l'eau pendant une période de temps suffisante pour que les lentilles absorbent l'eau, pour atteindre 125% à 225% de leur poids d'origine, égouttage de l'eau excédentaire résiduelle des lentilles, et mise au repos des lentilles pendant une période de temps suffisante pour acquérir une teneur en humidité pratiquement équilibrée dans toute la masse des lentilles;
(c) cuisson (20) des lentilles dans un environnement de vapeur pendant une période de temps suffisante pour ramollir les lentilles;
(d) cassure de la couverture externe du péricarpe des lentilles cuites par passage des lentilles entre deux cylindres lisses opposés comportant un espace entre eux, suffisant pour casser ladite couverture externe sans exposer les graines internes de cotylédon; et
(e) déshydratation (50) des lentilles cuites, la couverture externe du péricarpe étant cassée, par passage des lentilles à travers un four à compartiments comportant des commandes de section indépendantes pour la température et l'humidité.

2. Procédé selon la revendication 1, dans lequel la teneur en humidité pratiquement équilibrée dans toute la masse des lentilles représente 30% à 60% en volume des lentilles.

3. Procédé selon les revendications 1 ou 2, dans lequel l'environnement de vapeur a une pression comprise entre 69 kPa (10 PSIG) et 138 kPa (20 PSIG).

4. Procédé selon la revendication 3, dans lequel l'environnement de vapeur est un cuiseur à vapeur à vis sans fin (22).

5. Procédé selon la revendication 3, dans lequel l'environnement de vapeur est constitué par un cuiseur à vapeur rotatif (36).

6. Procédé selon l'une quelconque des revendications précédentes, dans lequel l'espace entre les cylindres est compris entre 1,78 mm (0,070 pouce) et 2,79 mm (0,110 pouce).

7. Procédé selon l'une quelconque des revendications précédentes, dans lequel les lentilles cuites sont déshydratées jusqu'à une teneur en humidité représentant 2% à 10% en volume.

8. Procédé de production de lentilles entières déshydratées et reconstituables, le procédé comprenant les étapes ci-dessous:
(a) fourniture d'une quantité de lentilles sèches non cuites comportant des graines internes de cotylédon et une couverture externe de péricarpe ayant en général une forme de lentille avec une paire de côtés opposés;
(b) trempage (18) des lentilles par immersion dans de l'eau pendant une période de temps suffisante pour que les lentilles absorbent l'eau, pour atteindre 125% à 225% de leur poids d'origine, égouttage de l'eau excédentaire résiduelle des lentilles, et mise au repos des lentilles pendant une période de temps suffisante pour acquérir une teneur en humidité pratiquement équilibrée dans toute la masse des lentilles;
(c) cuisson (20) des lentilles dans un environnement de vapeur pendant une période de temps suffisante pour ramollir les lentilles;
(d) cassure de la couverture externe du péricarpe des lentilles cuites par passage des lentilles entre deux cylindres lisses opposés comportant un espace entre eux, suffisant pour casser ladite couverture externe et exposer un millimètre des graines internes de cotylédon; et
(e) déshydratation (50) des lentilles cuites, la couverture externe du péricarpe étant cassée, par passage des lentilles à travers un four à compartiments comportant des commandes de section indépendantes pour la température et l'humidité.

9. Procédé selon la revendication 8, dans lequel la teneur en humidité pratiquement équilibrée dans toute la masse des lentilles représente 30% à 60% en volume des lentilles.

10. Procédé selon les revendications 8 ou 9, dans lequel l'environnement de vapeur a une pression comprise entre 69 kPa (10 PSIG) et 138 kPa (20 PSIG).

11. Procédé selon la revendication 10, dans lequel l'environnement de vapeur est un cuiseur à vapeur à vis sans fin (22).

12. Procédé selon la revendication 10, dans lequel l'environnement de vapeur est constitué par un cuiseur à vapeur rotatif (36).

13. Procédé selon l'une quelconque des revendications8 à 12, dans lequel l'espace entre les cylindres est compris entre 1,27 mm (0,050 pouce) et 1,78 mm (0,070 pouce).

14. Procédé selon l'une quelconque des revendications 8 à 13, dans lequel les lentilles cuites sont déshydratées jusqu'à une teneur en humidité représentant 2% à 10% en volume.
